# EUROPEAN PATENT APPLICATION

(11) **EP 2 061 014 A2**
(43) Date of publication of application: **20.05.2009**
(21) Application number: 08253520.4
(22) Date of filing: 29.10.2008
(51) Int. Cl.: G08B 17/00

(54) **Address card and addressable electronic apparatus**

(30) Priority: 14.11.2007 GB 0722356
(71) Applicant: APOLLO FIRE DETECTORS LIMITED, Havant Hampshire P09 1JR (GB)
(72) Inventor: Capaldi-Tallon, Alan, Hayling Island PO11 9PL (GB)
(74) Representative: Maury, Richard Philip

(57) **Abstract**

The invention is in the field of addressable networked devices, particularly those devices where the address is provided through passive mechanical means. Applications of the networked devices include alarm systems, particularly fire alarms, smoke alarms and intruder alarms. An electronic apparatus is arranged to communicate with like apparatus over a network in which each apparatus has its unique address, the electronic apparatus comprising a rectangular recess with a slot-shaped opening for receiving endwise a rectangular address card and having side rails for guiding the address card as it is slid into the recess; mechanical reading means for reading each digit of a binary address from a corresponding number of tabs selectively projecting from the plane of the address card, each representing a different digit of the binary address; and electromechanical transducing means for determining the address from the reading means to determine a unique address for the apparatus set by the card; the side rail or rails each being channel-shaped to constrain the address card to lengthwise translational motion and comprising an elongate flange parallel to the plane of the recess for overlying a corresponding marginal edge of an address card in use.

## Description

The invention is in the field of addressable networked devices, particularly those devices where the address is provided through passive mechanical means. Applications of the networked devices include alarm systems, particularly fire alarms, smoke alarms and intruder alarms.

### Background of the Invention

In known fire alarm systems, fire detectors are distributed throughout a building, the fire detectors being networked together and monitored by a central controller. When an alarm event occurs the central controller should be able to identify the location of the activated fire detector. Every fire detector in the network therefore should have a unique address which can be communicated to the central controller.

It is preferable to provide passive mechanical address-setting means rather than electronic address means because passive means are more reliable and cost effective. Many fire detectors have a detector head, with active electronics, mountable removably on a base unit to which electric cables are connected for the network communications. It is then preferable to provide the passive address-setting means in the base of each fire detector rather than in the detector head because this reduces the risk that the address will be inadvertently changed if only the detector head is replaced. Passive address means for setting the unique address in the base avoids the need for electronic circuitry in the base, which is preferable as the base is susceptible to damage during the final stage of wiring the network in a building.

EP 0362985 describes a fire detector system where a fire detector is programmed with a passive address card. The address card is located in the fire detector's mounting base, while the removable detector head has means for reading the address code when it is fitted to the base. However, the passive address card can be set only once, as the address is determined by cutting away portions of the card. Furthermore, when the card is fitted to the mounting base but prior to fitting of the detector head, the address elements of the card are exposed and there is a risk that the address of the card may be unintentionally modified.

### Summary of the Invention

The invention provides an address card programmable mechanically with an address for use in a networked apparatus arranged to accommodate the card and to read the address mechanically, the address card comprising: a planar frame having a planar major surface and at least one straight edge, and a plurality of spaced tabs each having opposed parallel major planar surfaces and mounted along the straight edge for rotation about a common axis extending along the edge through a quarter turn between a first stable position, at which a planar major surface of the tab is flush with the planar major surface of the frame and projects from the straight edge transversely of the frame, to represent a binary digit of one sense, and a second stable position, at which the tab projects normally from the plane of the frame and one of its major planar surfaces extends normally of the plane of the frame from the edge, to represent a binary digit of the opposite sense to the one sense; and stops positioned on the frame to prevent rotation of each tab beyond its second stable position and thus outside an operable rotary range of a quarter turn between the stable positions. In this way the address card may be re-used an indefinite number of times, simply by rearranging the movable tabs to represent a new identity of the networked apparatus.

The parallel major planar surfaces of the tabs are preferably configured to engage with a side rail in the networked apparatus in order to lock the tabs in position, such that when any one of the tabs is in its first position one of its major planar surfaces engages with the side rail, and when the tab is in its second position the other of its major planar surfaces engages with the side rail. Therefore, once inserted into a networked apparatus, the address of the address card cannot be modified, either maliciously or by accident.

A projection may be provided on each tab to engage with one of the stops on the frame in order to prevent rotation of the tab beyond its second stable position. It is preferable that when in the second position the tabs are correctly orientated because they are intended to operate electromechanical reading elements in the networked apparatus, and misaligned tabs will be prone to breakage or will not engage with the electromechanical reading elements in a reliable way.

Each tab of the address card may have a formation arranged to cooperate with corresponding formations on the planar frame so as to locate the tab positively at either its first or its second stable position and to resist rotary movement away from that position. This feature prevents each tab from being unintentionally dislodged from the selected position, for instance as the address card is being inserted into the networked apparatus.

Each tab may have a reaction surface disposed between the opposed parallel major planar surfaces, said reaction surface being domed.

The address card body may have a locking recess for accepting a locking tab in order to lock the address card in place in the networked apparatus. It is preferable that in order to remove the address card from the networked apparatus the locking tab should be released, thus the address card is not removable by simply pulling the address card.

The planar frame may have a handle at one end in order to assist insertion and removal of the address card.

The planar frame preferably has two parallel straight edges along each of which are arranged the tabs. This is a compact format and can provide a sufficient number of tabs in a given area to represent the required number of unique addresses.

The planar frame conveniently has numerals adjacent the tabs in order to visually identify each different bit value in the binary address that the tabs collectively represent by the senses of the binary digits represented by the tab positions.

The frame is preferably a one-piece plastics moulding. Preferably the frame is formed from a first polymer and the tabs are formed from a second polymer of different composition to the first polymer.

A further invention provides a method of making an address card as described above, the method comprising injecting a first polymer into a mould to form the frame, and injecting a second polymer, different from the first, into the mould to form the plurality of tabs along the straight edge of the frame, wherein differential shrinkage of the first and second polymers in the mould creates separation between the polymers, resulting in tabs that are retained by, but are separate from, the frame.

A further invention provides electronic apparatus arranged to communicate with like apparatus over a network in which each apparatus has its unique address, comprising:
a rectangular recess with a slot-shaped opening for receiving endwise a rectangular address card and having side rails for guiding the address card as it is slid into the recess; mechanical reading means for reading each digit of a binary address from a corresponding number of tabs selectively projecting from the plane of the address card, each representing a different digit of the binary address; and electromechanical transducing means for determining the address from the reading means to determine a unique address for the apparatus set by the card; the side rail or rails each being channel-shaped to constrain the address card to lengthwise translational motion and comprising an elongate flange parallel to the plane of the recess for overlying a corresponding marginal edge of an address card in use. The address of the electronic apparatus is reconfigurable when the address card is removed by changing the position of the tabs of the address card. This may be performed an indefinite number of times and allows mistakes to be corrected or the system to be reconfigured without having to use a new address card.

At least one of the side rails may have a chamfer facing the slot-shaped opening such that the gap between the side rails tapers lengthwise of the rails, to orientate tabs of an address card that are not fully in the first position or second position as the address card is slid into place in the electronic apparatus.

The mechanical reading means may comprise studs movable normal to the plane of the side rails and arranged to abut the tabs of an inserted address card.

The movable studs are preferably domed, which can help them engage smoothly with tabs in the second, raised, stable position.

The electronic apparatus preferably has a locking tab for engagement in a locking recess on the address card, for preventing the removal of the address card until the locking tab is has been released from the locking recess.

The electronic apparatus may for example be a fire detector, smoke detector, radiation detector or intruder detector.

In an embodiment the electronic apparatus has a circular base, the side rails being orientated at an acute angle to a diameter of the base.

The address of the electronic apparatus is reconfigurable when an address card embodying the invention is removed by changing the positions of the tabs of the address card.

In an embodiment comprising an electronic apparatus with an addressable card, at least one of the side rails is positioned to abut the planar major surface of the planar frame along the straight edge thereof so that it substantially abuts the planar major surface of any tab on that edge which is in its first stable position to prevent it rotating. Any tabs in the first position are prevented from moving by the side rails and cannot be raised.

Preferably at least one of the side rails has an inward facing surface along its edge positioned so as to abut substantially one of the major planar surfaces of any tab on the corresponding edge of the address card which is in its second stable position, to prevent it rotating. Any tabs in the second stable position are prevented from moving by the inward facing surface of the side rails and cannot be lowered.

In an embodiment the electronic apparatus comprises a head with active electronic circuitry and a base unit suitable for fixing to a permanent structure such as a wall or ceiling, the head being removably connected to the base unit. It is preferable to provide it in two parts because the base unit may be handled roughly as it is fixed in place. The head and address card are installed together at a later time, minimising the risk of damage to the sensitive electronic circuitry of the head.

In this embodiment, the slot-shaped opening for receiving the address card is preferably in the base unit, so that if the head is removed the risk that the address of the apparatus will be changed is minimised.

The base unit preferably has no electronic circuitry but has electrical terminals for connection to a network and to corresponding terminals in the head. In this way there are no sensitive electronics in the base, which could get damaged during its installation.

The head may have a sensor and detector circuitry.

The base preferably has a locking tab for engagement in a locking recess in the address card, for preventing the removal of the address card until the locking tab has been released from the locking recess, and the locking tab in the base is covered by the head when the head is in place on the base, to prevent access to the locking tab and hence removal of the address card. Locking the address card in place is preferable to deter malicious removal, and to prevent the card from working loose. The head, by covering the locking tab, also helps to prevent malicious removal of the address card, or removal of the address card when the apparatus is active.

A further invention provides a network of detector assemblies and a controller, wherein each detector assembly in the network is arranged to send signals representative of a unique address of that detector assembly to a controller, and wherein an address card associated with each detector assembly sets the unique address in that detector assembly, and wherein the address card has a set of tabs representative of digits of the unique address, the address card being repeatedly reconfigurable to change the address of the detector assembly by moving the tabs.

In an embodiment each electronic apparatus in the network is programmed by its address, which is a different address from that of the other electronic apparatuses in the network.

A further invention provides a method of resetting the address of an electronic apparatus according to the invention described above, in which the apparatus comprises a head with active electronic circuitry and a base unit suitable for fixing to a permanent structure such as a wall or ceiling, the head being removably connected to the base unit, the method comprising removing the head from the base, releasing the address card from the base and sliding it out of the base, moving the tabs of the address card to new positions representative of a new address, sliding the address card back into the base, and re-attaching the head.

### Brief Description of the Drawings

Embodiments of the invention will be described with reference to the accompanying drawings, in which:
Figure 1a is a schematic perspective view of a fire detector in place on the ceiling of a room;
Figure 1b is a diagram of a network of fire detectors;
Figure 2 is a schematic perspective view of a fire detector;
Figure 3a is a schematic perspective view of a base unit of the fire detector of figure 2;
Figure 3b is a cross-sectional view of the locking tab arrangement of the base unit of the fire detector of figure 2;
Figure 4a is a cross-sectional view of an address card housing located in the base unit of figure 3;
Figure 4b is a cross-sectional view of the address card housing of figure 4a with an address card in place;
Figure 5a is a perspective view from above of an address card for use with the base unit of figure 3;
Figure 5b is a perspective view from below of the address card of figure 5a;
Figure 6a is a perspective view from above of the address card of figure 5a and 5b with its tabs removed;
Figure 6b is a perspective view from above to an enlarged scale of the hinge support structure of the address card of figure 5a and 5b with its tabs removed;
Figure 7a is a perspective view to an enlarged scale of one of the tabs of the address card of figures 5a and 5b orientated to show a first surface of a pair of parallel major surfaces;
Figure 7b is a perspective view of the tab of figure 7a, orientated to show an opposed second major surface of a pair of the parallel surfaces;
Figure 7c is a perspective view of the tab of figure 7a, orientated to show a reader contact surface;
Figure 8 is a partial cross-sectional view of the fire detector and address card of figures 2 to 7;
Figure 9a is a schematic partial cross-sectional view of reading apparatus including a movable stud of a detector head in a first position; and
Figure 9b is a schematic, partial cross-sectional view of the reading apparatus of figure 9a in a second position.

### Description of the Preferred Embodiments

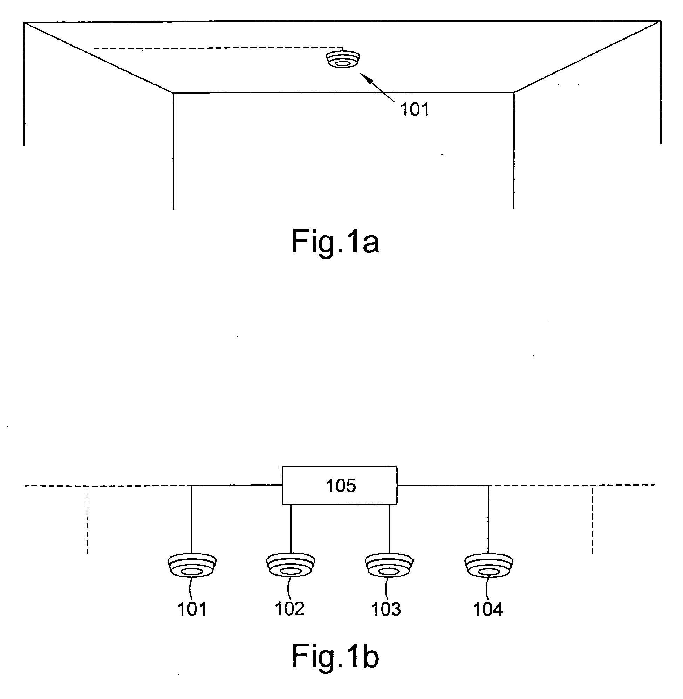

Figure 1a shows a fire detector 101 mounted in an operating position on the ceiling of a room. Equally the fire detector 101 may be mounted on a wall or in any other location where it can detect the presence of smoke and/or heat associated with a fire. It is intended that the fire detector 101 form part of a network of fire detectors installed in various locations around a building or group of buildings. Figure 1b illustrates such a network, where fire detectors 101, 102, 103, 104, etc. are electrically connected to a central controller 105. When one of the fire detectors generates an alarm signal the central controller 105 is alerted so that appropriate action may be taken. It is preferable that the central controller 105 be able to identify the particular fire detector that generated the alarm signal so that the location of the fire can be identified. The operation and control circuitry of the central controller 105 is well known to those skilled in the art and will therefore not be described herein.

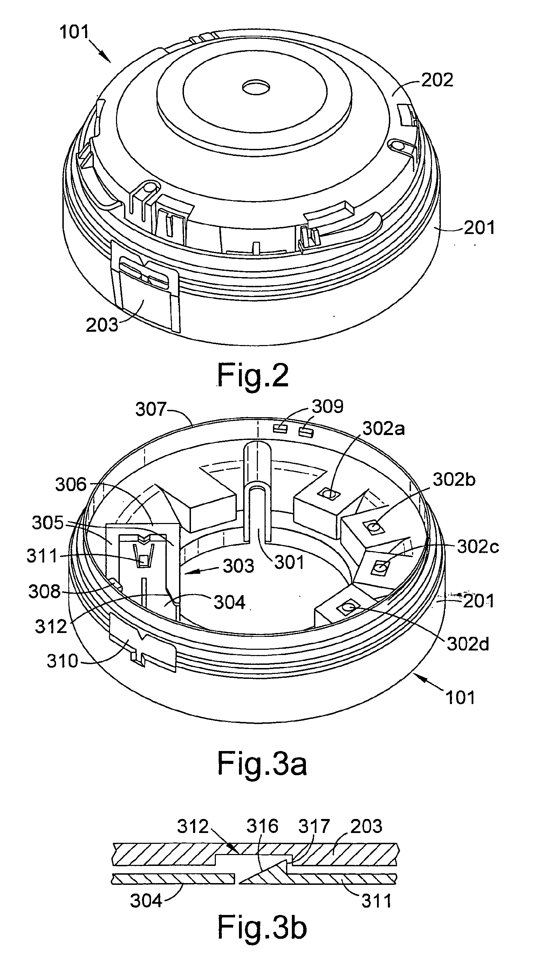

Figure 2 shows the fire detector 101 in more detail. The fire detector 101 comprises two elements: a base unit 201 and a detector head 202. The detector head 202 has a sensor capable of detecting the presence of smoke and/or heat. In other embodiments, the detector may be capable of detecting other conditions, for example the presence of gas, radiation or intruders.

The base unit 201 and detector head 202 are fabricated as separate units which may be repeatedly attached to and separated from each other. In the present embodiment the base unit 201 and detector head are a bayonet fit, whereby the detector head 202 is offered unto the base unit 201 and twisted into a fixed position. Also illustrated in figure 2 is an address card 203 shown fully inserted in place, which sets a unique address for identifying the fire detector 101 in a manner described below.

Figure 3 shows in detail the features of the base unit 201 without the detector head 202 or address card 203 in place. The base unit 201 has an outer geometry that is frusto-conical with a radial step leading to an upper cylindrical portion, the diameter of the base being greater than the height of the base unit along its axis. An upper ring 307 is provided within which the detector head 202 is nested and further projections 308, 309 are provided on the base unit 201 for locating with recesses (not shown) on the detector head 202 for fixing the detector head 202 in place on the base unit 201. Projection 308 is a single tab facing inwardly towards the centre of the upper ring 307. Projections 309 comprise a pair of tabs grouped together each of similar construction to projection 308. A single recess (not shown) on the detector head 202 is arranged to align with the single projection 308, while a pair of grouped recesses (not shown) are arranged to engage with the pair of tabs 309. In this way the detector head 202 may only be located with the base unit 201 at one unique angular position, ensuring that the two components are correctly aligned, for reasons that will be explained below. The recesses (not shown) in the detector head 202 further include inclined channels that, when the detector head 202 is twisted in relation to the base unit 201, serve to pull the detector head 202 towards the base unit 201 in a screw-like way. The channels may be provided with a further feature, such as a ridge, serving to positively engage the projections 308, 309 within the channel when the detector head 202 is fully screwed into position on the base unit 201, thus securing the detector head 202 in place on the base unit 201.

The base unit 201 is provided with mounting holes 301 for receiving screws for fixing the base unit 201 to a ceiling or wall etc. The base unit 201 has four electrical terminals 302a, 302b, 302c, 302d for supplying power to the detector head 202 and the means of communication with a controller to indicate the status and identity of the fire detector 101. The electrical terminals are shaped to engage with terminals on the underside of the detector head 202 when the detector head 202 is twisted into position on the base unit 201. Installation of the base unit 201 involves connecting power and communications cables to the base unit 201, such cables typically projecting from the wall or ceiling to which the base unit 201 is to be mounted. The base unit 201 has suitable connections, such as a well known terminal block and grub screw arrangement (not shown).

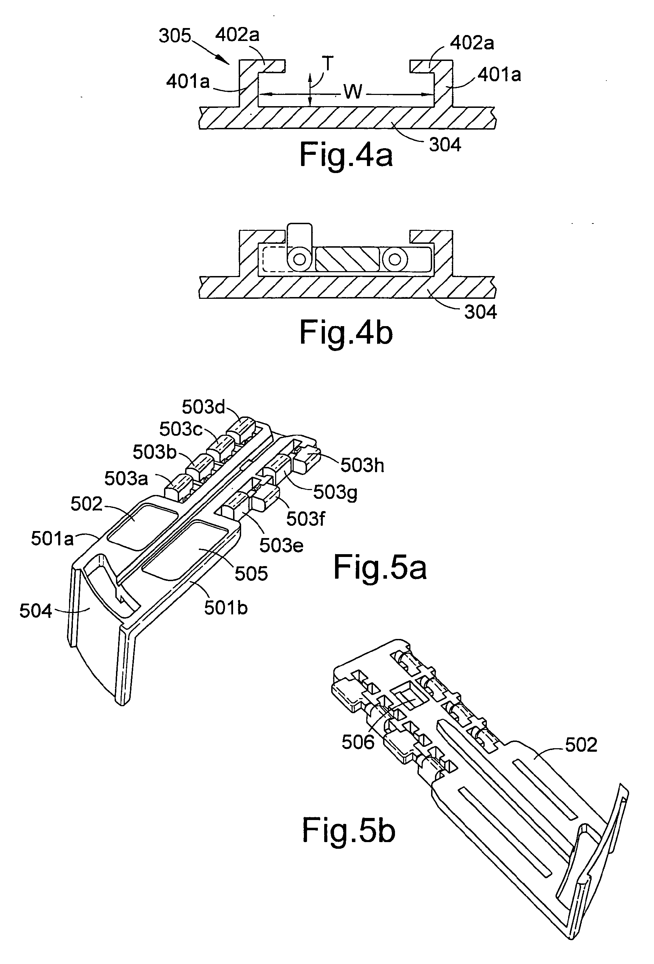

The base unit 201 has an internal housing 303 for accommodating and securing the address card 203 in a recess and for ensuring that the address card 203 is correctly positioned within the base unit 201, so that it aligns correctly with reading means on the detector head. The recess is defined as an internal housing 303 formed with a platform 304, where the platform 304 is a raised shelf within the periphery of the base unit 201. The housing 303 is elongate in a direction at an acute angle, in this case about 30 degrees, to the diameter of the base unit, so that it does not interfere with the central part of the detector. The housing 303 further has a pair of side rails 305 extending upwardly from the platform 304, shown to an enlarged scale in figures 4a and 4b. The side rails 305 define an outer limit for the address card 203 and ensure that the address card 203 is laterally restrained so that it is constrained to sliding motion only. An end stop 306 is provided to limit the extent to which the address card 203 can enter the base unit 201. The side rails 305 have lower portions 401a, 401b in figure 4a, and inwardly extending upper flanges 402a, 402b, whereby the distance W between the lower portions corresponds generally to the width of the address card 203 and the distance T between the platform 304 and the upper flanges 402a, 402b generally corresponds to the thickness of the address card 203, so that when the address card 203 is in position in the base unit 201 the upper and lower portions of the side rails 305 prevent any movement of the address card 203 within the housing 303 except translational sliding motion. The inwardly extending upper flanges 402a, 402b of the side rails 305 further serve to restrict movement of components of the address card 203, as discussed below. The upper flanges 402a, 402b each have a chamfer 312, one of which is shown in figure 3a, such that the gap between the side rails 305 tapers symmetrically lengthwise of the rails, and becomes narrower towards the end stop 306, to provide a graduated run-in as the address card 203 is slid into place.

The base unit 201 is provided with a slot-shaped opening 310 in figure 3a located on a side wall of the base unit 201, the opening 310 being of a width and height just large enough to allow the address card 203 to be slotted into the housing 303 in the base unit 201.

The platform 304 has a locking tab 311, as shown in detail in figure 3b, for engaging with the address card 203 to lock the address card 203 in place in the base unit 201.

The locking tab 311 is formed as a tongue formed by a channel cut into the platform 304, having at its free end a slope 316 facing towards the opening 310 and a vertical face 317 behind the slope to form a barb-like feature. The arrangement is such that the action of slotting the address card 203 into the housing 303 depresses the locking tab 311, until a recess 312 of the address card 203 is positioned over the locking tab 311, upon which the locking tab 311 moves to its rest position such that the vertical face 317 offers a barrier to removal of the address card 203 from the housing 303.

The address card 203 will now be described with reference to figure 5a. The address card 203 is generally card-shaped, i.e. it has a pair of straight parallel long edges 501 a, 501b defining its length and a pair of edges defining its width, the length and width dimensions both being substantially greater than its thickness. The term "card" is used broadly as the skilled person will appreciate that many alternative forms and materials may be used to achieve the same purpose as the address card 203 described. For example the thickness of the card could be of similar dimension to its width: the card could be of a conventional key shape, having a circular cross-section shank with a planar frame and tabs at one end. The card is typically fabricated from plastics material but could equally be of metal or composite material. The dimensions of the card are of the order of 1-2 cm in width, 5-10cm in length and 0.2-0.6cm in thickness. However, it will be appreciated that any dimensions could be used provided that a user is able to comfortably handle the card.

The address card 203 has a frame 502, which supports eight tabs 503a-503h towards a front end of the address card 203 and a handle 504 in the form of a normally projecting flange at the rear of the address card 203. The handle 504 has a display region where the decimal or textual identification of the address card 203 may be written. The terms front and rear are used in the sense that the front end of the address card 203 is that end which is inserted first into the base unit 201. The frame 502 has a planar major surface, i.e. a relatively large flat surface and long edges 501a, 501b.

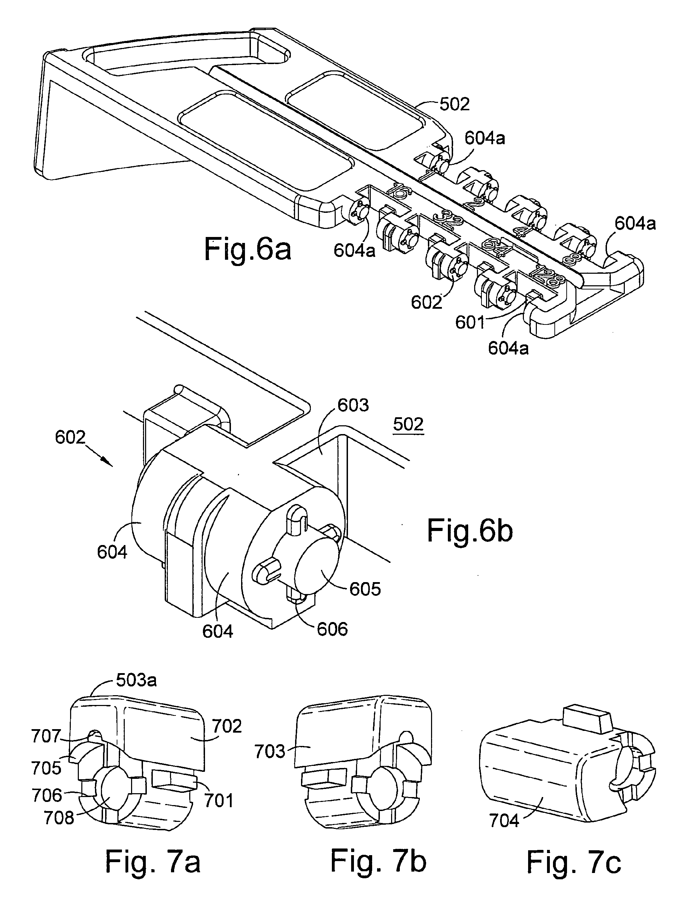

The frame 502 of the address card 203 is narrower at the front end than at the handle end and has a number of hinge projections 602, shown in figure 6a. Figure 6b shows in detail the hinge projections where it can be seen that they each comprise a spacing section 603 for locating the hinge axis at a distance from the main body of the frame 502, so that the tabs 503 clear the frame 502 as they rotate about the hinge axis. On each side of each spacing section 603 there is a hinge block 604 which projects a short distance normal to the surface of the spacing section 603 upon which it is mounted. The hinge blocks 604 are solid and substantially cylindrical in shape. The walls of the main frame 502 at the ends of each row of tabs also have hinge blocks 604a located coaxially with the hinge blocks 604 of the spacing sections 603. From the centre of the free end of each hinge block 604, 604a there projects a tab retaining stud 605, about which are a number of raised tab locating projections 606. Each tab 503 has a pair of arcuate bearing surfaces 705, one at each axial end, as shown in figure 7a, hinge recesses 708 and tab locating recesses 706. A tab locating recess 707 is also provided in the arcuate bearing surfaces 705.

The frame 502 and handle 504 are preferably a one-piece moulding of plastics material. The frame 502 and tabs 503a-503h are produced at the same time in a two-shot moulding process, where two different polymers are injected into a mould. The frame 502 is formed from the first polymer whilst the tabs 503a-503h are formed from the second polymer. The tabs 503a-503h are formed in place on the frame 504. Differential shrinkage of the polymers creates separation between the two polymers resulting in tabs that are retained by, but are separate from, the frame 502. The tabs 503 fit on the frame 502 such that the tab retaining pins 605 locate in the hinge recesses 708 and together hold the tabs 503 rotatably within the frame 502. The arcuate bearing surfaces 705 of the tabs 503 bear against the outer cylindrical surface of the cylindrical hinge blocks 604 such that when the tabs 503 in the raised position are loaded, that is when they actuate the reading means in the detector head, the load is transferred to the frame 502 between the arcuate bearing surfaces 705 and the cylindrical hinge blocks 604.

The raised tab locating projections 606 of the cylindrical hinge blocks 604 engage with the tab locating recesses 706 of the tabs 503 when the tabs are in either the lowered or raised positions. The effect of this engagement is to offer a positive indication that the tabs are in either the first or second position, and to retain the tabs 503 in their selected positions while the address card 203 is being inserted into the base unit 201.

The tabs 503 are arranged in two parallel rows, each row of tabs 503 being located along a different long edge 501a, 501b, the equally-spaced tabs occupying a section of the long edges towards the front end of the address card 203. The tabs 503 are independently hinge mounted to the frame 502 about an axis running parallel to the long edges 501a, 501b the axis being set back from the long edges. The tabs have a number of predominant surfaces including a pair of parallel, opposed major planar surfaces 702 in figure 7a and 703 in figure 7b, and a domed contact, or reaction, surface 704 in figure 7c. The tabs may rotate about the hinge axis over an operable rotary range of a quarter turn between two stable positions. The two stable positions are i) a first position where the parallel opposed surfaces 702, 703 of the tabs 503 are co-planar, or flush, with upper and lower surfaces of the frame 502: this is the so-called "lowered" position, and ii) a second position where the parallel opposed surfaces 702, 703 are normal to the upper surfaces of the frame 502 and the contact surface 704 is parallel to, but raised from, the upper surface of the frame 502. Figure 5a shows tabs 503f and 503h in the first position, while tabs 503a, b, c, d, e and g are in the second, so-called "raised" position. The two positions represent a binary digit: a tab in the lowered position represents the "0" state, while a tab in the raised position represents the "1" state.

As can be seen in figure 6a and figure 7a, stops 601 on the frame and projections on each tab 701 are provided to ensure that the tabs do not rotate beyond the second, raised position, where the sides 702, 703 are parallel to the upper surface of the frame 502. The tabs 701 are free to rotate through 90 degrees in the reverse direction, to project from the lower surface of the address card. However, no useful purpose is served by tabs oriented in this inverse position: the slot-shaped opening 301 in the base unit 201 is shaped so that an address card having such inverted tabs cannot be inserted into the base unit 201.

The arrangement of eight tabs can represent any 8-bit binary number by positioning the tabs 503 in either the raised or lowered position. It will be clear to the skilled person that other coding systems (such as "two's complement" or inverse binary) may be applied to the arrangement of tabs in order to impart a unique address to the address card 203. With N tabs each representing a different binary digit, the address card 203 is capable of providing a unique address for up to 2^{N} fire detectors, so in this example of N=8, the address can be from 0 to 255. The number of detectors capable of being identified can be selected by having more or fewer movable tabs on the frame 502. The frame is provided with a visual indication of the bit number of each tab, as a power of 2, for example the numeral "1" is moulded next to the first tab 503a, the numeral "2" next to the second tab 503b, the numeral "4" next to the third tab 503c and so on. An identification display region 505 is also provided where the decimal or textual identification of the address card 203 may be written and re-written.

The tabs 503 are, in this example, identical plastics mouldings, with dimensions in the ranges of length 0.3-0.6 cm, width 0.3-0.6 cm and thickness 0.2-0.5 cm. The skilled person will appreciate that the dimensions of the tabs 503 are not limited to these ranges. The upper limits of the dimensions of the tabs 503 are determined by the dimensions of the frame 502. The lower limits of the dimensions of the tabs 503 should be such as to retain ease of rotation of the tabs 503 in the frame 502 by a user.

Figure 5b shows the address card 203 in an inverted position to display the recess 506 which engages with the locking tab 311 on the base unit 201 to lock the address card 203 in place. A narrow slot is provided in the recess 506, which is used to provide access for a tool, such as a bladed screwdriver, to disengage the locking tab 311 from the recess 506 in order to release the address card 203 from the base unit 201. The locking tab 311 is covered by the detector head when it is coupled to the base unit, so as to prevent unlocking and removal of the address card.

Installation of the fire detector 101 will now be described. A first stage of installation involves fixing the base unit 201 in place, which is typically carried out in an environment where sensitive components could be damaged. The base unit 201 is of simple construction and only the minimum of electrical connections are made at this stage, namely connecting the power supply and data transport connections. A second stage is to allocate an address to each of the fire detectors in the network. As mentioned above, in this embodiment up to 256 networked fire detectors may be uniquely identified using identical respective eight-tab address cards 203. When a base unit 201 is identified its address is "programmed" into an address card 203 by manually rotating the tabs 503 of the address card 203 into appropriate positions. The address of the address card 203 may also be written or printed as a number or as words onto the identification display region 505 for ease of identification and confirmation. The address card 203 is then slotted into the base unit 201 to the point where the clip 311 of the base unit 201 engages with the recess 506 of the address card 203 to lock the address card 203 in place in the base unit 201. The action of sliding the address card 203 into the base unit 201 causes any tabs that are not fully in the first or second positions to be orientated there by the cam action of the chamfer 312 of flanges 402a, 402b. When fully inserted into the base unit 201, tabs that are in the first position (e.g. 503e in figure 4b) are retained beneath the side rail flanges 402a, 402b while tabs that are in the second position (e.g. 503a in figure 4b) are held there because they abut the edge surfaces of side rail flanges 402a, 402b that face inwards. In either position it will be appreciated that the tabs 503 cannot move from their selected positions, so the unique address is set and remains set. It will also be appreciated that the contact surface 704 of each tab in its second position projects above the flanges 402a, 402b.

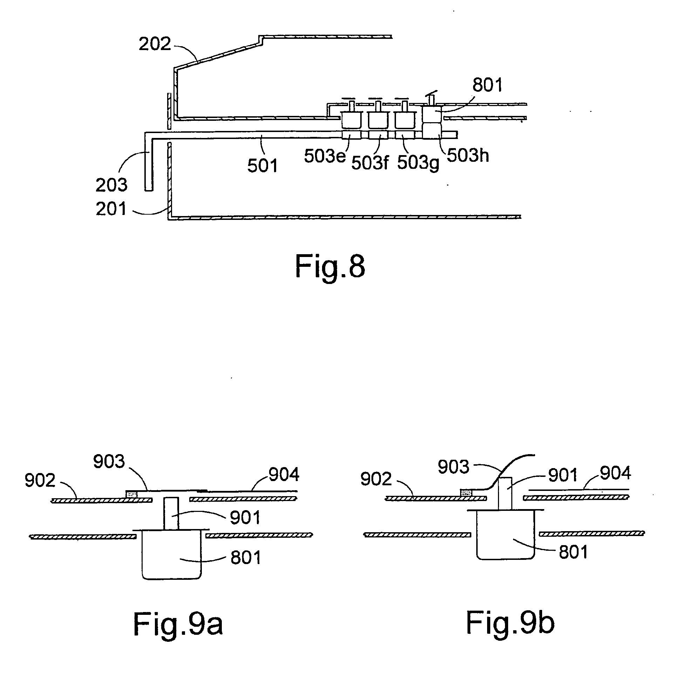

The detector head 202 is then twisted into place on the base unit with a bayonet fit. Figure 8 shows a partial cross-section of the complete assembly to illustrate how the tabs 503 impart an address to the detector head 202. The detector head 202 has an array of studs 801 on its underside, corresponding to the array of tabs 503 on the address card. The studs 801 are movable normal to the plane of the address card between a first position and a second position under the action of the abutting tabs 503 of the address card, such that a tab in its second, raised position engages with a corresponding stud 801 as the detector head 202 is twisted into place on the base unit 201. The studs are spring-biased downwardly towards the rails by leaf springs 903 shown in figures 9a and 9b and as described below.

The studs 801 are mounted in the detector head 202 as shown in Figure 9a. Pins 901 provided on the stud 801 project from the top of the stud 801 through an insulating board 902, biased downwards by a conducting leaf spring 903. A series of conductive strips, one of which 904 is shown in figures 9a and 9b, is provided on the upper surface of the insulating board 902. In a resting position the leaf spring 903 is in contact with the conductive strip 904 which completes an electrical circuit. When a tab 503 is in its second, raised position it depresses the stud 801 when the address card 203 is in place in the base unit 201. The stud 801 moves the pin 902 in a direction towards the body of the detector head 202 against the bias of the leaf spring 903 to the point where the contact between the conductive strip 904 and the leaf spring 903 is broken. The broken contact is sensed by circuitry in the detector head. Each of the studs 801 of the detector head 202 either completes a circuit or does not, depending on the position of the address tabs 502 on the address card 203. The set of electrical signals thus caused are interpreted by circuitry in the detector head, and thereby allow the data transmitted between the fire detector and controller to include the address of the detector. As such circuitry is of conventional construction no further description is required.

The detector head 202 is rotated into position over the base unit 201 and the address card 203. Therefore the sides of the studs 801 of the detector head 202 engage with the sides of the raised tabs 503e, 503g first. The reaction surface of each tab 502 and the studs 801 are therefore domed in order to allow a smooth engagement between these components.

If it is required to change the address of the address card for any reason, firstly the detector head 202 is removed by twisting and moving it away from the base unit. This reveals the address card 203 partially enclosed by the housing 303. A suitable tool such as a bladed screw driver is inserted into the slot in the centre of the address card 203 to release the locking tab 311 from the recess 506. The address card handle 504 is simultaneously pulled and the address card 203 slid out of the base unit 201. The tabs 503 are then moved to the new positions, the address may also be re-written over the identification display region 505, and then the address card 203 is re-inserted into the base unit 201. The detector head 202 is then refitted to the base unit 201.

## Claims

1. An address card programmable mechanically with an address for use in a networked apparatus arranged to accommodate the card and to read the address mechanically, the address card comprising:
a planar frame having a planar major surface and at least one straight edge, and a plurality of spaced tabs each having opposed parallel major planar surfaces and mounted along the straight edge for rotation about a common axis extending along the edge through a quarter turn between a first stable position, at which a planar major surface of the tab is flush with the planar major surface of the frame and projects from the straight edge transversely of the frame, to represent a binary digit of one sense, and a second stable position, at which the tab projects normally from the plane of the frame and one of its major planar surfaces extends normally of the plane of the frame from the edge, to represent a binary digit of the opposite sense to the one sense;
and stops positioned on the frame to prevent rotation of each tab beyond its second stable position and thus outside an operable rotary range of a quarter turn between the stable positions.

2. An address card according to claim 1, wherein the parallel major planar surfaces of the tabs are configured to engage with a side rail in the networked apparatus in order to lock the tabs in position, such that when any one of the tabs is in its first stable position one of its major planar surfaces engages with the side rail, and when the tabs is in its second stable position the other of its major planar surfaces engages with the side rail.

3. An address card according to claim 1 or 2, wherein a projection is provided on each tab to engage with one of the stops on the frame in order to prevent rotation of the tab beyond its second stable position.

4. An address card according to any preceding claim, wherein each tab has a formation arranged to cooperate with corresponding formations on the planar frame so as to locate the tab positively at either its first or its second stable position and to resist rotary movement away from that position.

5. An address card according to any preceding claim, wherein each tab has a reaction surface disposed between the opposed parallel major planar surfaces, said reaction surface being domed.

6. An address card according to any preceding claim, wherein the planar frame has a locking recess for accepting a locking tab in order to lock the address card in place in the networked apparatus.

7. An address card according to any preceding claim, wherein the planar frame has a handle at one end.

8. An address card according to any preceding claim, wherein the planar frame has two parallel straight edges along each of which are arranged the tabs.

9. An address card according to any preceding claim, wherein the planar frame has numerals adjacent the tabs in order to visually identify each different bit value in the binary address that the tabs collectively represent by the senses of the binary digits represented by the tab positions.

10. An address card according to any preceding claim, wherein the frame is a one-piece plastics moulding.

11. An address card according to any one of claims 1 to 10, wherein the frame is formed from a first polymer and the tabs are formed from a second polymer of different composition from the first polymer.

12. A method of making an address card according to any one of claims 1 to 11, comprising the steps of:
injecting a first polymer into a mould to form the frame, and
injecting a second polymer, different from the first, into the mould to form the plurality of tabs along the straight edge of the frame,
wherein differential shrinkage of the first and second polymers in the mould creates separation between the polymers, resulting in tabs that are retained by, but are separate from, the frame.

13. Electronic apparatus arranged to communicate with like apparatus over a network in which each apparatus has its unique address, comprising:
a rectangular recess with a slot-shaped opening for receiving endwise a rectangular address card and having side rails for guiding the address card as it is slid into the recess;
mechanical reading means for reading each digit of a binary address from a corresponding number of tabs selectively projecting from the plane of the address card, each representing a different digit of the binary address;
and electromechanical transducing means for determining the address from the reading means to determine a unique address for the apparatus set by the card;
the side rail or rails each being channel-shaped to constrain the address card to lengthwise translational motion and comprising an elongate flange parallel to the plane of the recess for overlying a corresponding marginal edge of an address card in use.

14. Electronic apparatus according to claim 13, wherein at least one of the side rails has a chamfer facing the slot-shaped opening such that the gap between the side rails tapers lengthwise of the rails, to orientate tabs of an address card that are not fully in the first position or second position as the address card is slid into place in the rectangular recess.

15. Electronic apparatus according to claim 13 or 14, wherein the mechanical reading means comprises studs movable normal to the plane of the side rails and arranged to abut the tabs of an inserted address card.

16. Electronic apparatus according to claim 15, wherein the movable studs are domed.

17. Electronic apparatus according to any of claims 13 to 16, comprising a locking tab for engagement in a locking recess on the address card, for preventing the removal of the address card until the locking tab has been released from the locking recess.

18. Electronic apparatus according to any of claims 13 to 17, constituting a fire detector, smoke detector, radiation detector or intruder detector.

19. Electronic apparatus according to any of claims 13 to 18, having a circular base, the side rails being orientated at an acute angle to a diameter of the base.

20. Electronic apparatus according to any of claims 13 to 19, further comprising an address card according to any of claims 1 to 11, whereby the address of the electronic apparatus is reconfigurable when the address card is removed from the electronic apparatus by changing the positions of the tabs of the address card.

21. Electronic apparatus according to claim 20, wherein at least one of the side rails is positioned to abut the planar major surface of the planar frame along the straight edge thereof so that it substantially abuts the planar major surface of any tab on that edge which is in its first stable position to prevent it rotating.

22. Electronic apparatus according to claim 20 or 21, in which at least one of the side rails has an inward facing surface along its edge positioned so as to abut substantially one of the major planar surfaces of any tab on the corresponding edge of the address card which is in its second stable position, to prevent it rotating.

23. Electronic apparatus according to any of claims 13 to 22 comprising a head with active electronic circuitry and a base unit suitable for fixing to a permanent structure such as a wall or ceiling, the head being removably connected to the base unit.

24. Electronic apparatus according to claim 23, wherein the slot-shaped opening for receiving the address card is in the base unit.

25. Electronic apparatus according to claim 23 or claim 24, wherein the base unit has no electronic circuitry but has electrical terminals for connection to a network and to corresponding terminals in the head.

26. Electronic apparatus according to claim 25, wherein the head has a sensor and detector circuitry.

27. Electronic apparatus according to any of claims 20 to 26, comprising a head with active electronic circuitry and a base unit suitable for fixing to a permanent structure such as a wall or ceiling, the head being removably connected to the base unit, the base unit having a locking tab for engagement in a locking recess on the address card, for preventing the removal of the address card until the locking tab has been released from the locking recess, wherein the locking tab in the base unit is covered by the head when the head is in place on the base unit, to prevent access to the locking tab and hence removal of the address card.

28. A network of detector assemblies and a controller, wherein each detector assembly in the network is arranged to send signals representative of a unique address of that detector assembly to a controller, wherein an address card associated with each detector assembly sets the unique address in that detector assembly, and wherein the address card has a set of tabs representative of digits of the unique address, the address card being repeatedly reconfigurable to change the address of the detector assembly by moving the tabs.

29. A network of electronic apparatuses according to any of claims 20 to 27, each programmed by its address card and with a different address.

30. A method of resetting the address of an electronic apparatus according to any of claims 20 to 27, the apparatus comprising a head with active electronic circuitry and a base unit suitable for fixing to a permanent structure such as a wall or ceiling, the head being removably connected to the base unit, comprising:
removing the head from the base,
releasing the address card from the base and sliding it out of the base,
moving the tabs of the address card to new positions representative of a new address, sliding the address card back into the base, and
re-attaching the head.
